# FASCICULE DE BREVET EUROPEEN

(11) **EP 2 374 137 B1**
(45) Date de publication et mention de la délivrance du brevet: **27.03.2013**
(21) Numéro de dépôt: 09797051.1
(22) Date de dépôt: 23.12.2009
(51) Int. Cl.: G21F 9/16, C03C 3/089, G21F 9/30, C03C 3/095, C03C 8/02, C03C 4/20

(54) **VERRE ALUMINO-BOROSILICATÉ POUR LE CONFINEMENT D'EFFLUENTS LIQUIDES RADIOACTIFS, ET PROCÉDÉ DE TRAITEMENT D'EFFLUENTS LIQUIDES RADIOACTIFS**
ALUMINO-BORSILIKATGLAS ZUM EINSCHLUSS VON RADIOAKTIVEN FLÜSSIGEN ABWÄSSERN UND VERFAHREN ZUM VERARBEITEN VON RADIOAKTIVEN ABWÄSSERN
ALUMINO-BOROSILICATE GLASS FOR CONFINING RADIOACTIVE LIQUID EFFLUENTS, AND METHOD FOR PROCESSING RADIOACTIVE EFFLUENTS

(30) Priorité: 30.12.2008 FR 0859131
(43) Date de publication de la demande: 12.10.2011
(73) Titulaire: Areva NC, 75009 Paris (FR)
(72) Inventeur: DUSSOSSOY, Jean-Luc, F-34830 Jacou (FR); GRANDJEAN, Agnès, F-30330 Saint-Marcel De Careiret (FR); ADVOCAT, Thierry, 91570 Bievres (FR); BOUSQUET, Nicolas, 30200 Bagnols sur cèze (FR); SCHULLER, Sophie, F-30200 Chusclan (FR)
(74) Mandataire: Ilgart, Jean-Christophe
(86) Numéro de dépôt international: PCT/EP2009/067901
(87) Numéro de publication internationale: WO 2010/076288

(56) Documents cités:
- EP-A- 0 088 512
- EP-A- 0 155 418
- DE-A1- 3 204 204
- FR-A- 2 525 381
- NL-A- 7 907 421

## Description

L'invention concerne un verre alumino-borosilicaté pour le confinement d'effluents liquides radioactifs de moyenne activité générés notamment par les opérations de mise à l'arrêt définitif (MAD) des usines du cycle du combustible.

L'invention concerne également un adjuvant de vitrification se présentant notamment sous la forme d'une fritte de verre ou d'un mélange de produits chimiques notamment d'oxydes sous forme de poudre.

L'invention a trait en outre à un procédé de traitement d'effluents liquides radioactifs de moyenne activité par calcination de ces effluents, en vue d'obtenir un calcinat, addition d'un adjuvant de vitrification se présentant notamment sous la forme d'une fritte de verre ou d'un mélange de produits chimiques sous forme de poudre audit calcinat, et fusion du calcinat et de l'adjuvant de vitrification dans un creuset froid afin d'obtenir le verre alumino-borosilicaté.

Le domaine technique de l'invention peut être défini, de manière générale, comme celui du traitement des effluents radioactifs, et plus particulièrement des effluents radioactifs de moyenne activité, par confinement, enrobage ou immobilisation.

Ces effluents radioactifs de moyenne activité sont notamment les effluents de décontamination générés par le rinçage lors des opérations de mise à l'arrêt définitif (« MAD ») des usines de retraitement du combustible nucléaire.

La composition chimique de ces effluents de décontamination dépend principalement des différents réactifs utilisés.

Ces réactifs peuvent être à base d'acide nitrique ou de soude, ou bien dans certains cas il peut s'agir d'effluents plus spécifiques à base de carbonate de sodium ou de nitrate de cérium.

Actuellement les effluents radioactifs de moyenne activité tels que les effluents de décontamination mentionnés ci-dessus sont essentiellement traités par bitumage ou cimentation.

Le procédé d'enrobage par bitumage consiste à mélanger à chaud des déchets sous forme de boues (sels) à du bitume.

Le mélange obtenu est déshydraté et coulé dans un conteneur où il est refroidi.

L'enrobage de bitume assure ainsi une dispersion homogène des sels et l'immobilisation (le blocage) des radionucléides au sein de la matrice.

En France, le procédé de bitumage a été développé dès les années 60 pour conditionner les boues de précipitation résultant du traitement des effluents liquides, et il a été mis en oeuvre industriellement.

C'est un procédé éprouvé qui bénéficie d'un large retour d'expérience.

Le bitume a été choisi comme matériau d'enrobage des déchets radioactifs de faible à moyenne radioactivité pour son pouvoir agglomérant élevé, sa grande inertie chimique, son imperméabilité, sa faible solubilité dans l'eau, sa faible température de mise en oeuvre, et son coût modéré.

En revanche, le bitumage présente plusieurs inconvénients majeurs :
- le bitume a une stabilité à l'irradiation réduite, ce qui entraine un gonflement au cours du temps des enrobés, notamment à cause de la production d'hydrogène par radiolyse ;
- afin d'éviter tout risque d'incendie, en phase de production des enrobés, le domaine de fonctionnement sur des installations de bitumage est assez restreint. En effet, lors de la fabrication de l'enrobé bitumeux, des réactions exothermiques peuvent avoir lieu, et il faut donc pouvoir les maitriser au mieux ;
- la tenue mécanique des bitumes est très faible du fait de leur fort fluage ;
- le volume de déchets généré par cette matrice est important, compte tenu de l'activité des effluents « MAD ».

Le ciment, ou plus généralement les liants hydrauliques sont largement utilisés dans l'industrie nucléaire. Ils servent à immobiliser des déchets solides de faible et moyenne activité au sein de conteneurs ou bien ils servent de matrice de conditionnement pour enrober des déchets de moyenne activité.

La cimentation est également utilisée pour enrober des déchets en solution ou sous forme pulvérulente tels que des concentrats d'évaporation, des boues de traitement chimique, des résines échangeuses d'ions....

Les ciments réunissent en effet de nombreuses propriétés favorables pour le traitement de ce type de déchets, à savoir coût modeste, simplicité de mise en oeuvre, bonne résistance mécanique et, en général, stabilité dans le temps.

Dans le cas de la cimentation de déchets liquides, les procédés sont le plus souvent continus. Ainsi, par exemple, le ciment et les déchets sont dosés séparément et introduits dans un malaxeur, puis le mélange obtenu est ensuite déversé dans un conteneur.

La cimentation présente néanmoins deux inconvénients importants :
- après enrobage, le volume du déchet est doublé ;
- le ciment est un matériau évolutif, et certains constituants des déchets et du ciment peuvent interagir. Ceci peut perturber l'hydratation de la matrice et donc affecter la pérennité des matériaux obtenus ;
- le déchet doit être prétraité pour limiter ses interactions ultérieures avec le ciment.

Bien que diverses compositions chimiques de liants hydrauliques soient actuellement à l'étude pour remédier aux inconvénients susmentionnés, aucune d'entre elles n'est encore totalement satisfaisante.

Par ailleurs, on connaît (voir notamment les Techniques de l'Ingénieur, BN 3660-1 à BN 3660-31) les procédés de vitrification qui consistent à incorporer dans un verre de composition adaptée tous les éléments contenus dans des effluents de haute activité ainsi que les fines de dissolution.

Le principal avantage des verres provient du fait qu'ils sont amorphes, ce qui leur confère des propriétés remarquables mais qui présente aussi des inconvénients, à savoir :
- la proportion d'éléments étrangers acceptables par un verre est limitée, et la charge du verre en calcinat issu de la calcination des effluents, et en fines, reste généralement assez faible ;
- les verres sont des matériaux métastables.

Mais le principal défaut des matrices en verre est leur sensibilité aux attaques chimiques, et les problèmes liés à l'altération par lixiviation des matrices en verre qui sont importants.

La sensibilité des verres vis-à-vis de la lixiviation est directement liée à la présence d'éléments alcalins tels que le sodium, dont le départ par diffusion entraine un affaiblissement du réseau vitreux.

Pour compenser partiellement le rôle néfaste du sodium, on ajoute du bore au verre de silice pour donner ainsi les verres dits « verres borosilicatés ».

Ainsi un verre très utilisé en vitrification des produits de fission (à haute activité) des combustibles UOX1 est le verre dit R7T7 qui est un verre borosilicaté dont la composition est la suivante : SiO 45%, B₂O 14%, Na₂O 10%, Al₂O₃ 5%, oxydes de produits de fission, Zr, U, particules métalliques 13% dont les platinoïdes (RuO₂, Rh, Pd), et le reste d'autres oxydes de Fe, Ni, Cr, Ca, Zn, P.

Comme le décrivent les « Techniques de l'Ingénieur », le procédé industriel de vitrification continue consiste à alimenter un pot ou creuset de fusion chauffé par un four à induction moyenne fréquence avec le calcinat des solutions des produits de fission PF et de la fritte de verre.

La digestion a lieu de 1000 à 1200 °C pendant quelques heures et on remplit des conteneurs cylindriques de 0,2 m³ en deux coulées, libérées par une vanne thermique. Le calcinat est préparé en évaporant, en séchant et en calcinant par exemple à 500°C les solutions de produits de fission dont la composition est convenablement ajustée, dans un four rotatif alimenté en continu et chauffé par une résistance.

Des colis de déchets de haute activité (« HA ») sont ainsi produits.

Des verres pour le confinement d'effluents liquides radioactifs de moyenne activité générés notamment par les opérations de « MAD » n'ont jamais été décrits dans l'art antérieur.

Il existe donc au regard de ce qui précède un besoin pour un matériau permettant le confinement d'effluents liquides radioactifs de moyenne activité, et notamment des effluents générés par les opérations de mise à l'arrêt définitif des usines de retraitement du combustible nucléaire, qui ne présente pas les inconvénients des bitumes et liants hydrauliques décrits plus haut.

Le but de la présente invention est, entre autres, de fournir un matériau qui réponde à ce besoin, et qui présente notamment une grande stabilité à l'irradiation, un excellente tenue mécanique, une grande résistance aux attaques chimiques, qui soit facile à mettre en oeuvre, et qui ne subisse qu'une augmentation de volume réduite après le confinement des effluents.

Le but de la présente invention est encore de fournir un tel matériau pour le confinement des effluents liquides radioactifs qui ne présente pas les inconvénients, limitations, défauts et désavantages des matériaux de confinement d'effluents liquides radioactifs de l'art antérieur, et qui surmonte les problèmes présentés par ces matériaux.

Ce but, et d'autres encore, sont atteints, conformément à l'invention, par un verre alumino-borosilicaté pour le confinement d'un effluent liquide radioactif de moyenne activité, présentant la composition suivante exprimée en pourcentages massiques par rapport à la masse totale du verre :
a) SiO₂ : 45 à 52
b) B₂O₃ : 12 à 16, 5
c) Na₂O : 11 à 15
d) Al₂O₃ : 4 à 13
e) Un ou plusieurs élément(s) ETR choisi(s) parmi les oxydes des éléments de transition tels que Fe₂O₃, Cr₂O₃, MnO₂, TcO₂, et les platinoïdes tels que RuO₂, Rh, Pd:>0 à 5,25 ;
f) Un ou plusieurs éléments TRA choisis parmi les oxydes de terres rares tels que La₂O₃, Nd₂O₃, Gd₂O₃, Pr₂O₃, CeO₂, et d' actinides tels que UO₂, ThO₂, Am₂O₃, PuO₂ CmO₂, NpO_{2 :} 0 à 3,5 ;
g) ZrO₂ : 0 à 4
h) Autres éléments AUT constitutifs de l'effluent : 0 à 4 ;
la composition du verre satisfait en outre les inéquations suivantes :
(1) SiO₂ + Al₂O₃ < 61 %
(2) 71 % < SiO₂ + B₂O₃ + Na₂O < 80, 5 %
(3) B₂O₃/Na₂O > 0,9
(4) 0, 7 Al₂O₃ - ETR < 5 %
(5) Al₂O₃/ETR > 2,5
(6) 0,127 (B₂O₃ + Na₂O) > AUT.

et en ce que le verre contient de Fe₂O₃.

Dans ces inéquations sont portées les teneurs en SiO₂, Al₂O₃, B₂O₃, Na₂O, ETR, AUT, exprimées en pourcentages massiques par rapport à la masse totale du verre.

Avantageusement, au moins l'un parmi TRA et AUT est supérieur à 0. ETR est supérieur à 0.

Avantageusement, ETR, TRA et AUT sont tous supérieurs à 0.

De préférence encore, le verre contient à la fois Fe₂O₃, Cr₂O₃, MnO₂, TcO₂, RuO₂, Rh, Pd, La₂O₃, Nd₂O₃, Gd₂O₃, Pr₂O₃, CeO₂, UO₂, ThO₂, Am₂O₃, PuO₂ CmO₂, NpO₂, SO₃, P₂O₅, M₀O₃, éventuellement BaO et éventuellement ZrO₂ ; c'est-à-dire que la teneur en tous ces composés est supérieure à 0.

Lorsque ETR est supérieur à 0, le verre contient du Fe₂O₃ par exemple à raison de 1 à 5 % massique, de préférence de 2 à 4 % massique.

Un verre convenant pour le confinement d'effluents liquides radioactifs de moyenne activité générés notamment par les opérations de « MAD » n'a jamais été décrit ni suggéré dans l'art antérieur.

Les verres selon l'invention conduisent à la fabrication de conteneurs standards de déchets de type B qui se distinguent totalement des colis de verre CSD-V préparés avec le verre dit R7T7 décrit plus haut, non seulement par leur composition chimique mais aussi par leur niveau d'activité (qui est généralement inférieur d'un facteur 50 à 100 par rapport au verre R7T7) et leur puissance thermique intrinsèque qui est généralement d'environ 2,5 kW pour un colis CSD-V préparé à partir de verre R7T7.

Les matrices de verre R7T7 ont permis le confinement d'effluents de haute activité mais ces matrices sont précisément spécifiquement adaptées au confinement d'effluents de haute activité et il s' avère qu'elles ne sont pas adaptées au confinement d'effluents liquides radioactifs de moyenne activité tels que ceux générés par les opérations de mise à l'arrêt définitif (« MAD ») des usines de retraitement du combustible nucléaire.

En effet des problèmes spécifiques se posent pour le confinement des effluents radioactifs de moyenne activité, et il n'était absolument pas évident que la vitrification des déchets radioactifs, mise en oeuvre avec succès avec les déchets radioactifs de haute activité, puisse être utilisée avec les effluents, déchets liquides radioactifs de moyenne activité, eu égard à la spécificité de ces derniers.

Les enseignements concernant la vitrification des effluents de haute activité ne peuvent en aucune manière être transposés directement à la vitrification des effluents de moyenne activité.

En effet, il s'est avéré que le verre selon l'invention, du fait de sa composition très spécifique et des conditions particulières régissant cette composition, permettait pour la première fois le confinement des effluents liquides radioactifs de moyenne activité générés notamment par les opérations de « MAD ».

En permettant ainsi le confinement dans un verre des déchets de moyenne activité, l'invention s'affranchit des inconvénients liés au bitumage ou à la cimentation et apporte au confinement des déchets, effluents liquides radioactifs de moyenne activité, tous les avantages inhérents à la vitrification.

En outre le verre selon l'invention peut, de manière surprenante, être élaboré facilement par un procédé de type calcination, vitrification en creuset froid, tel que déjà décrit plus haut.

Les verres selon l'invention présentent en effet un domaine de composition spécifique qui communique au verre toutes les propriétés requises pour une élaboration en creuset froid et qui assure un confinement durable grâce à une très bonne tenue à la lixiviation dans l'ensemble de ce domaine de composition.

En d'autres termes, le verre selon l'invention répond, et cela dans l'ensemble de son domaine de composition, non seulement aux contraintes du procédé de vitrification envisagé mais aussi aux contraintes liées de lixiviation.

Plus précisément, le verre selon l'invention peut être élaboré à une gamme de températures de 1200 °C à 1300 °C, ce qui est parfaitement compatible avec la vitrification par creuset froid, et il présente en outre une viscosité comprise entre 20 dPa.s et 100 dPa.s (20 à 100 Poises) à la température d'élaboration, par exemple de 1250 °C, et une résistance électrique comprise entre 2 et 10 Ω.cm à la température d'élaboration, par exemple de 1250 °C, ce qui répond aux contraintes du procédé de vitrification.

Du point de vue de la tenue du verre à la lixiviation, le verre selon l'invention, dans tout le domaine de composition défini plus haut, satisfait aux exigences qui permettent d'assurer un comportement à long terme satisfaisant. Ainsi, sa vitesse initiale d'altération V0 est inférieure à 10 g.m⁻².j⁻¹ à 100°C, de préférence inférieure à 5 g.m⁻².j⁻¹ à 100°C, et son pH d'équilibre en test statique est inférieur à 10, de préférence inférieur à 9,5 à 90°C.

Généralement les autres éléments constitutifs de l'effluent (« AUT ») sont choisis parmi les anions molybdate, phosphate et sulfate, et l'oxyde de baryum BaO. En d'autres termes, les autres éléments sont généralement choisis parmi les oxydes suivants : SO₃, P₂O₅, MoO₃, BaO.

Les verres selon l'invention sont élaborés à partir d'un adjuvant de vitrification spécifique contenant les oxydes suivants : SiO₂, B₂O₃, Na₂O, Al₂O₃, ZrO₂, CaO, Li₂O, Fe₂O₃, NiO et CoO dans des proportions spécifiques, cet adjuvant de vitrification étant ajouté au calcinat produit par calcination des effluents liquides de moyenne activité à traiter de manière à avoir une composition de verre située dans le domaine de composition, un adjuvant de calcination dit aussi « adjuvant de dilution » pouvant en outre être ajouté à l'effluent préalablement dans la solution ou lors de la calcination.

Ainsi, l'invention concerne en outre un adjuvant de vitrification caractérisé en ce qu'il présente la composition suivante, exprimée en pourcentages massiques :
- SiO₂ : 58 à 65%
- B₂O_{3 :} 15 à 19%
- Na₂O : 5 à 10%
- Al₂O₃ : 0 à 3%
- Li₂O : 1 à 4%
- CaO : 1,5 à 4%
- ZrO₂ : 0 à 3%
- Fe₂O₃ : 2 à 4%
- NiO _{:} 0 à 2%
- CoO : 0 à 2%

Un exemple de composition de cet adjuvant est donné ci-dessous, exprimé également en pourcentages massiques :
- SiO₂ : 62,85%
- B₂O_{3 :} 17,12%
- Na₂O : 7,50%
- Al₂O₃ : 1,00%
- Li₂O : 2,71%
- CaO : 3,87%
- ZrO₂ : 1,25%
- Fe₂O₃ : 3,00%
- NiO : 0,35%
- CoO : 0,35%

L'adjuvant de vitrification peut se présenter sous la forme d'une fritte de verre comprenant les oxydes spécifiques mentionnés ci-dessus ou bien sous la forme d'un mélange de produits chimiques, notamment d'oxydes, sous forme de poudres.

De préférence l'adjuvant de vitrification se présente sous la forme d'une fritte de verre.

Cette fritte de verre spécifique a une composition qui permet d'obtenir un verre dans le domaine de composition selon l'invention notamment à partir de tout effluent liquide radioactif dont la composition moyenne, minimale et maximale se trouve dans les plages définies plus bas.

Cependant la composition chimique de l'adjuvant de vitrification pourra être modifiée en fonction de la variation des teneurs en éléments chimiques de l'effluent liquide à traiter.

L'invention concerne également un procédé de traitement d'un effluent liquide radioactif de moyenne activité, dans lequel on réalise une calcination dudit effluent, auquel on a éventuellement ajouté un adjuvant de calcination pour obtenir un calcinat, puis on ajoute un adjuvant de vitrification au dit calcinat, on procède à la fusion dudit calcinat et dudit adjuvant de vitrification dans un creuset froid pour obtenir une fonte verrière, puis l'on refroidit ladite fonte verrière, moyennant quoi on obtient le verre alumino-borosilicaté tel que défini plus haut.

Le procédé selon l'invention convient particulièrement bien au traitement d'un effluent liquide radioactif de moyenne activité qui contient les éléments suivant dans les teneurs suivantes :
- Na : de 30 g/L à 80 g/L
- B : de 0g/L à 5g/L
- Mn : de 0g/L à 1g/L
- Ce : de 0g/L à 14g/L
- Fe : de 0g/L à 3g/L
- Ni : de 0g/L à 1g/L
- Cr : de 0g/L à 1g/L
- Zr : de 0g/L à 16g/L
- Mo : de 0 g/L à 10g/L
- P : de 0g/L à 4g/L
- S : de 0g/L à 1,7 g/L
- Ba : de 0g/L à 7g/L
- Gd : de 0g/L à 1 g/L
- Tc : 1g/L ou moins
- Actinides : de 0g/L à 8g/L
- Platinoïdes : 1g/L ou moins ;
la teneur totale en lesdits éléments étant de 30g/L à 154,7 g/L.
Précisons que les teneurs précisées ci-dessus sont bien les teneurs élémentaires.

L'effluent liquide ci-dessus est défini par un domaine de composition exprimé par des teneurs minimales et maximales de chacun des éléments ainsi que par des teneurs minimale et maximale totales.

A l'intérieur de ces plages, on peut définir des teneurs dites de référence définissant ainsi une composition de référence correspondant de même à un effluent de référence qui est l'effluent de moyenne activité type qui peut être traité par le procédé selon l'invention pour donner un verre présentant l'ensemble des propriétés avantageuses énumérées plus haut.

Cet effluent liquide radioactif dit « de référence » contient les éléments suivants dans les teneurs dites « moyennes » ou « de référence » suivantes :
- Na : 55 g/L
- B : 2,5 g/L
- Mn : 0,5 g/L
- Ce : 7 g/L
- Fe : 1,5 g/L
- Ni : 0,5 g/L
- Cr : 0,5 g/L
- Zr : 8 g/L
- Mo : 5 g/L
- P : 2 g/L
- S : 0,85 g/L
- Ba : 3,5 g/L
- Gd : 0,5 g/L
- Tc : 1g/L
- Actinides : 4 g/L
- Platinoïdes : 1g/L;
la teneur totale en lesdits éléments étant de 93,35 g/L.

Le domaine de composition de la matrice vitreuse borosilicatée de conditionnement selon l'invention est particulièrement adapté aux effluents radioactifs mentionnés ci-dessus. Au sein du domaine de composition des matrices de verre selon l'invention, les propriétés physico-chimiques de ces matrices sont telles qu'à haute température il est possible de les élaborer par un procédé de type calcination vitrification.

Avantageusement, l'adjuvant de vitrification est tel que défini plus haut.

Généralement la fusion du calcinat -issu de la calcination de l'effluent et des adjuvants de calcination, dilution éventuels- et de l'adjuvant de vitrification, est réalisée à une température de 1200 °C à 1300 °C, de préférence de 1250 °C.

L'invention va maintenant être décrite de manière détaillée dans la description qui suit, donnée à titre illustratif et non limitatif, plus particulièrement en relation avec le procédé de traitement d'effluents radioactifs de moyenne activité.

L'effluent liquide radioactif de moyenne activité qui peut être traité par le procédé selon l'invention peut être notamment un effluent aqueux nitrique contenant des nitrates de métaux ou de métalloïdes.

L'effluent traité par le procédé selon l'invention aura généralement la composition telle qu'elle a déjà été précisée plus haut.

Le procédé selon l'invention comporte deux étapes principales.

La première étape est une étape de calcination de l'effluent au cours de laquelle se produit une évaporation, un séchage puis une calcination, une dénitration d'une partie des nitrates si l'effluent en contient.

On peut noter que les sels de l'effluent sont généralement composés très majoritairement de nitrates ou d'hydroxydes qui sont décomposés dans le calcinateur.

La deuxième étape est une étape de vitrification par dissolution dans un verre de confinement du calcinat produit lors de l'étape de calcination.

L'étape de calcination est généralement effectuée dans un tube tournant chauffé par exemple à une température d'environ 400 °C par un four électrique. Le calcinat solide est broyé par une barre folle placée à l'intérieur du tube tournant chauffé à la température voulue.

Lors de la calcination de certaines solutions, en particulier des solutions riches en nitrate de sodium, autrement dit des solutions à forte teneur en sodium en milieu nitrique, on peut observer un collage du calcinat sur les parois du tube tournant pouvant conduire à un colmatage total du tube du calcinateur.

La parade consiste à ajouter à l'effluent au moins un composé réputé non collant dénommé adjuvant de dilution ou adjuvant de calcination, tel que le nitrate d'aluminium, le nitrate de fer, le nitrate de zirconium, les nitrates de terres rares, ou leurs mélanges pour permettre leur calcination en évitant le colmatage du calcinateur.

De préférence selon l'invention on utilise en tant qu'adjuvant de calcination, un adjuvant composé d'un mélange de nitrate d'aluminium et de nitrate de fer, de préférence dans une proportion de 0,66<Al₂O₃/(Al₂O₃+Fe₂O₃) < 1 où les teneurs sont des teneurs massiques en oxydes.

En outre le rapport Na₂O/somme des oxydes dans le calcinat est généralement inférieur ou égal à 0,3.

Le procédé de traitement selon l'invention comprend après l'étape de calcination une étape de vitrification du calcinat. Cette étape de vitrification consiste à dissoudre le calcinat dans un verre de confinement.

A cette fin, on ajoute au calcinat issu de la calcination de l'effluent auquel on avait éventuellement ajouté un adjuvant de dilution, un adjuvant de vitrification comprenant les oxydes suivants : SiO₂, B₂O₃, Na₂O, Al₂O₃, ZrO₂, CaO, Li₂O, Fe₂O₃, NiO et CoO. Cet adjuvant de vitrification comprend généralement les oxydes susmentionnés dans les proportions spécifiques pour l'obtention d'un verre dans le domaine de composition de l'invention, fonction de la composition de l'effluent.

Cet adjuvant de vitrification est généralement tel que défini plus haut.

L'adjuvant de vitrification peut se présenter sous la forme d'un mélange de poudres, ou bien sous la forme d'une fritte de verre incluant les oxydes.

Il est généralement avantageux d'utiliser une fritte de verre qui nécessite moins d'énergie de fusion que le mélange de poudres.

L'adjuvant de vitrification est ajouté à une quantité définie du calcinat de manière à respecter le domaine de composition défini plus haut et l'on procède à la fusion de l'ensemble. Selon l'invention la fonte verrière obtenue présente des propriétés physico-chimiques aussi bien de viscosité que de résistivité qui la rendent totalement adaptée à la vitrification par creuset froid.

Le verre est élaboré à une température généralement de 1200 °C à 1300 °C, par exemple de 1250 °C dans un creuset froid chauffé par induction. Le verre est homogénéisé dans le creuset par brassage mécanique et/ou bullage, lorsque le niveau haut du four est atteint on effectue une coulée de verre dans un conteneur, la quantité de verre coulée est par exemple de l'ordre de 200kg.

On procède ensuite au refroidissement de la fonte verrière pour donner le verre selon l'invention qui est un verre alumino-borosilicaté de durabilité chimique élevée, présentant les propriétés avantageuses mentionnées plus haut et répondant aux critères définis ci-dessus.

L'invention va maintenant être décrite en référence aux exemples suivants, donnés à titre illustratif et non limitatif

### EXEMPLES

Trois compositions d'effluents liquides radioactifs de moyenne activité issus d'opérations de « MAD » seront traitées ci-dessous :
- la solution de référence citée ci-dessus est vitrifiée avec la fritte de verre de référence, en recherchant un taux d'incorporation en déchet nominal de 12% (Exemple 1) ;
- une solution riche en sodium est traitée avec un adjuvant de vitrification sous forme de fritte (Exemple 2) ;
- une solution pauvre en sodium est traitée avec un adjuvant de vitrification sous forme de poudres (Exemple 3).

Le choix des frittes ou adjuvant est dicté par l'optimisation du taux d'incorporation en déchet.

Tous les verres doivent être contenus dans le domaine de composition cité ci-dessus.

### Exemple 1 :

| Composition du déchet en élément | Composition du déchet en pourcentage d'oxyde |
|---|---|
| - Na : 55 g/L | Na₂O = 56,42% |
| - B : 2,5 g/L | B₂O₃ = 6,13% |
| - Mn : 0,5 g/L | MnO₂ = 0,60% |
| - Ce : 7 g/L | Ce₂O₃ = 6,24% |
| - Fe : 1,5 g/L | Fe₂O₃ = 1,63% |
| - Ni : 0,5 g/L | NiO = 0,48% |
| - Cr : 0,5 g/L | Cr₂O₃ = 0,56% |
| - Zr : 8 g/L | ZrO₂ = 8,23% |
| - Mo : 5 g/L | MoO₃ = 5,71% |
| - P : 2 g/L | P₂O₅ = 3,49% |
| - S : 0,85 g/L | SO₃ = 1,61% |
| - Ba : 3,5 g/L | BaO = 2,97% |
| - Gd : 0, 5 g/L | Gd₂O₃ = 0,46% |
| - Tc : 1g/L | TcO₂ = 1,01% |
| - Actinides : 4 g/L | OX. Actinides = 3,45% |
| - Platinoïdes : 1g/L | Platinoïdes = 1,00% |

La solution est trop riche en oxyde de sodium pour être calcinée en l'état, et il est nécessaire de rajouter un adjuvant de vitrification pour satisfaire le critère de calcination : Na₂O/somme des oxydes dans le calcinat égal 0,3.

Il est nécessaire de rajouter du nitrate d'aluminium et de fer pour diminuer la quantité de sodium dans le calcinat.

Dans ce cas, pour 100 g de calcinat, il est nécessaire d'ajouter l'équivalent de 88,07 g d'alumine et oxyde de fer pour obtenir une solution calcinable.

D'autre part, les contraintes du domaine vitrifiable impose pour un taux de déchet de 12% un rapport Al₂O₃/ (Al₂O₃+Fe₂O₃) apporté par l'adjuvant de calcination supérieur ou égal à 0,91.

La calcinat est porté à une température de 400°C environ.

La composition du calcinat en pourcentage massique est donnée ci-dessous.
- Na₂O = 30,00%
- B₂O₃ = 3,26%
- Al₂O₃ = 42,61%
- MnO₂ = 0,32%
- Ce₂O₃ = 3, 32%
- Fe₂O₃ = 5,08%
- NiO = 0,26%
- Cr₂O₃ = 0,30%
- ZrO₂ = 4,37%
- MoO₃ = 3, 04%
- P₂O₅ = 1,85%
- SO₃ = 0,86%
- BaO = 1,58%
- Gd₂O₃ = 0,25%
- TcO₂ = 0,54%
- OX. Actinides = 1,84%
- Platinoïdes = 0,53%
12% de taux d'incorporation impose, avec la fritte de référence, l'ajout de 77,43% de fritte et 32,57% de calcinat pour obtenir le verre final. La température d'élaboration est de 1220°C.
- SiO₂ = 48.66%
- Na₂O = 12,58%
- B₂O₃ = 13, 99%
- Al₂O₃ = 10,39%
- Cao = 3,00%
- Li₂O = 2,10%
- MnO₂ = 0,07%
- Ce₂O₃ = 0,75%
- Fe₂O₃ = 3,47%
- NiO = 0,33%
- CoO = 0,27%
- Cr₂O₃ = 0, 07%
- ZrO₂ = 1,96%
- MoO₃ = 0, 69%
- P₂O₅ = 0, 42%
- SO₃ = 0, 19%
- BaO = 0,36%
- Gd₂O₃ = 0,06%
- TcO₂ = 0,12%
- OX. Actinides = 0,41%
- Platinoïdes = 0,12%

### Exemple 2 :

Dans cet exemple, on traite une solution riche en sodium par calcination-vitrification avec utilisation d'une fritte.

| Composition du déchet en élément | Composition du déchet en pourcentage d'oxyde |
|---|---|
| - Na : 80 g/L | Na₂O = 65,31% |
| - B : 2,5 g/L | B₂O₃ = 4,88% |
| - Mn : 0,5 g/L | MnO₂ = 0,48% |
| - Ce : 7 g/L | Ce₂O₃ = 4,97% |
| - Fe : 1,5 g/L | Fe₂O₃ = 1,30% |
| - Ni : 0,5 g/L | NiO = 0,39% |
| - Cr : 0,5 g/L | Cr₂O₃ = 0,44% |
| - Zr : 8 g/L | ZrO₂ = 6,55% |
| - Mo : 5 g/L | MoO₃ = 4,54% |
| - P : 2 g/L | P₂O₅ = 2,77% |
| - S : 0,85 g/L | SO₃ = 1,28% |
| - Ba : 3,5 g/L | BaO = 2,37% |
| - Gd : 0,5 g/L | Gd₂O₃ = 0,37% |
| - Tc : 1g/L | TcO₂ = 0,80% |
| - Actinides : 4 g/L | OX. Actinides = 2,75% |
| - Platinoïdes : 1g/L | Platinoïdes = 0,80% |

La solution est trop riche en oxyde de sodium pour être calcinée en l'état, il est nécessaire de rajouter un adjuvant de vitrification pour satisfaire le critère de calcination : Na₂O/somme des oxydes dans le calcinat égal 0,3.

Il est nécessaire de rajouter du nitrate d'aluminium et de fer pour diminuer la quantité de sodium dans le calcinat.

Dans ce cas, pour 100 g de calcinat, il est nécessaire d'ajouter l'équivalent de 117,71 g d'alumine et d'oxyde de fer pour obtenir une solution calcinable.

D'autre part, les contraintes du domaine vitrifiable imposent pour un taux de déchet de 12% un rapport Al₂O₃/(Al₂O₃+Fe₂O₃) apporté par l'adjuvant de calcination supérieur ou égal à 0,85.

La calcinat est porté à une température de 400°C environ.

La composition du calcinat en pourcentage massique est donnée ci-dessous :
- Na₂O = 30,00%
- B₂O₃ = 2,24%
- Al₂O₃ = 44,88%
- MnO₂ = 0,22%
- Ce₂O₃ = 2,28%
- Fe₂O₃ = 9,79%
- NiO = 0,18%
- Cr₂O₃ = 0,20%
- ZrO₂ = 3,01%
- MoO₃ = 2,09%
- P₂O₅ = 1,27%
- SO₃ = 0,59%
- BaO = 1,09%
- Gd₂O₃ = 0,17%
- TcO₂ = 0,37%
- OX. Actinides = 1,26%
- Platinoïdes = 0,37%

Dans ce cas, le taux de charge en déchet est limité par la teneur admissible en alumine dans le verre soit 13%.

Le taux de charge maximal de 12,56% est obtenu avec la fritte de référence par l'ajout de 72,65% de fritte et 27,35% de calcinat pour obtenir le verre final. La température d'élaboration est de 1250°C. La composition du verre est la suivante :
- SiO₂ = 45,65%
- Na₂O = 13,65%
- B₂O₃ = 13,05%
- Al₂O₃ = 13,00%
- CaO = 2,81%
- Li₂O = 1,97%
- MnO₂ = 0,06%
- Ce₂O₃ = 0,62%
- Fe₂O₃ = 4,86%
- NiO = 0,33%
- CoO = 0,25%
- Cr₂O₃ = 0,06%
- ZrO₂ = 1,74%
- MeO₃ = 0,57%
- P₂O₅ = 0,35%
- SO₃ = 0,16%
- BaO = 0,30%
- Gd₂O₃ = 0,05%
- TcO₂ = 0,10%
- OX. Actinides = 0,35%
- Platinoïdes = 0,10%

### Exemple 3 :

Dans cet exemple, on traite une solution pauvre en sodium par calcination-vitrification avec utilisation d'une fritte.

| Composition du déchet en élément | Composition du déchet en pourcentage d'oxyde |
|---|---|
| - Na : 40 g/L | Na₂O = 48,49% |
| - B : 2, 5 g/L | B₂O₃ = 7,25% |
| - Mn : 0,5 g/L | MnO₂ = 0,71% |
| - Ce : 7 g/L | Ce₂O₃ = 7,37% |
| - Fe : 1,5 g/L | Fe₂O₃ = 1,93% |
| - Ni : 0,5 g/L | NiO = 0,57% |
| - Cr : 0, 5 g/L | Cr₂O₃ = 0,66% |
| - Zr : 8 g/L | ZrO₂ = 9,72% |
| - Mo : 5 g/L | MoO₃ = 6,75% |
| - P : 2 g/L | P₂O₅ = 4,12% |
| - S : 0,85 g/L | SO₃ = 1,91% |
| - Ba : 3,5 g/L | BaO = 3,51% |
| - Gd : 0, 5 g/L | Gd₂O₃ = 0,55% |
| - Tc : 1g/L | TcO₂ = 1,19% |
| - Actinides : 4 g/L | OX. Actinides = 4,08% |
| - Platinoïdes : 1g/L | Platinoïdes = 1,18% |

La solution est trop riche en oxyde de sodium pour être calcinée en l'état, il est nécessaire de rajouter un adjuvant de vitrification pour satisfaire le critère de calcination : Na₂O/somme des oxydes dans le calcinat égal 0,3.

Il est nécessaire de rajouter du nitrate d'aluminium et de fer pour diminuer la quantité de sodium dans le calcinat.

Dans ce cas, pour 100 g de calcinat, il est nécessaire d'ajouter l'équivalent de 61,64 g d'alumine et d'oxyde de fer pour obtenir une solution calcinable.

D'autre part, les contraintes du domaine vitrifiable imposent Al₂O₃/ (Al₂O₃+Fe₂O₃) apporté par l'adjuvant de calcination supérieur ou égal à 0,85.

La calcinat est porté à une température de 400°C environ.

Le taux de charge dans l'exemple 3 est limité par la quantité de silice provenant de la fritte de verre.

La composition du mélange de poudre peut être optimisée afin d'obtenir le taux d'incorporation maximal en déchet.

Une composition d'adjuvant répondant aux critères du domaine de composition est la suivante :
- 67,5% de SiO₂ sous forme de sable fin ;
- 19,8% de B₂O₃ sous forme d'acide borique granulé (H₃BO₃) ;
- 3% de Na₂O sous forme de carbonate de sodium ou dans la solution sous forme de nitrate de sodium ;
- 4% de CaO sous forme de wollastonite (CaSiO₃) ;
- 2% de Fe₂O₃ sous forme de FeO ;
- 0,25% de NiO sous forme de NiO ;
- 0,45% de CoO sous forme de CoO.

Le taux maximal d'incorporation est atteint lorsque la borne en silice est atteinte soit 66,67% de poudres pour 33,33% de calcinat. Ce qui correspond à en taux de charge en déchet de 20,62%.

La température d'élaboration est de 1200°C.

Les formes chimiques des différents adjuvants sont données à titres d'exemples et peuvent être changées par d'autres produits.

La composition du verre est la suivante :
- SiO₂ = 45,00%
- Na₂O = 12,00%
- B₂O₃ = 14,69%
- Al₂O₃ = 10,80%
- CaO = 2,67%
- Li₂O = 2,00%
- MnO₂ = 0, 15%
- Ce₂O₃ = 1, 52%
- Fe₂O₃ = 3,64%
- NiO = 0,28%
- CoO = 0,30%
- Cr₂O₃ = 0,14%
- ZrO₂ = 2,00%
- MoO₃ = 1,39%
- P₂O₅ = 0,85%
- SO₃ = 0,39%
- BaO = 0,72%
- Gd₂O₃ = 0,11%
- TcO₂ = 0,25%
- OX. Actinides = 0,84%
- Platinoïdes = 0,24%

## Revendications

1. Verre alumino-borosilicaté pour le confinement d'un effluent liquide radioactif de moyenne activité, présentant la composition suivante exprimée en pourcentages massiques par rapport à la masse totale du verre :
a) SiO₂ : 45 à 52
b) B₂O₃ : 12 à 16,5
c) Na₂O : 11 à 15
d) Al₂O₃ : 4 à 13
e) un ou plusieurs élément(s) ETR choisi(s) parmi les oxydes des éléments de transition tels que Fe₂O₃, Cr₂O₃, MnO₂, TcO₂, et les platinoïdes tels que RuO₂, Rh, Pd:> 0 à 5, 25 ;
f) Un ou plusieurs éléments TRA choisis parmi les oxydes de terres rares tels que La₂O₃, Nd₂O₃, Gd₂O₃, Pr₂O₃, CeO₂, et d'actinides tels que UO₂, ThO₂, Am₂O₃, PuO₂ CmO₂, NpO₂ : 0 à 3,5 ;
g) ZrO₂ : 0 à 4
h) Autres éléments AUT constitutifs de l'effluent : 0 à 4 ;
la composition du verre satisfaisant en outre les inéquations suivantes dans lesquelles les teneurs en SiO₂, Al₂O₃, B₂O₃, Na₂O, ETR, AUT sont exprimées en pourcentages massiques par rapport à la masse totale du verre :
(1) SiO₂ + Al₂O₃ < 61 %
(2) 71 % < SiO₂ + B₂O₃ + Na₂O < 80, 5 %
(3) B₂O₃/Na₂O > 0,9
(4) 0,7 Al₂O₃ - ETR < 5 %
(5) Al₂O₃/ETR > 2, 5
(6) 0,127 (B₂O₃ + Na₂O) > AUT ;
et le verre contenant du Fe₂O₃.

2. Verre selon la revendication 1, dans lequel les autres éléments constitutifs de l'effluent (« AUT ») sont choisis parmi les oxydes suivants : SO₃, P₂O₅, MoO₃, BaO.

3. Adjuvant de vitrification **caractérisé en ce qu'**il présente la composition suivante exprimée en pourcentages massiques :|
- SiO₂ : 58 à 65
- B₂O₃ : 15 à 19
- Na₂O : 5 à 10
- Al₂O₃ : 0 à 3
- Li₂O : 1 à 4
- CaO : 1,5 à 4
- ZrO₂ : 0 à 3
- Fe₂O₃ : 2 à 4
- NiO : 0 à 2
- CoO : 0 à 2

4. Adjuvant de vitrification selon la revendication 3, **caractérisé en ce qu'**il se présente sous la forme d'une fritte de verre.

5. Adjuvant de vitrification selon la revendication 3, **caractérisé en ce qu'**il se présente sous la forme d'un mélange de produits chimiques, notamment d'oxydes, sous forme de poudres.

6. Procédé de traitement d'un effluent liquide radioactif de moyenne activité, dans lequel on réalise une calcination dudit effluent, auquel on a éventuellement ajouté un adjuvant de calcination, pour obtenir un calcinat, puis on ajoute un adjuvant de vitrification audit calcinat, on procède à la fusion dudit calcinat et dudit adjuvant de vitrification dans un creuset froid pour obtenir une fonte verrière, puis l'on refroidit ladite fonte verrière, moyennant quoi on obtient le verre alumino-borosilicaté tel que défini dans la revendication 1.

7. Procédé selon la revendication 6, dans lequel effluent liquide radioactif de moyenne activité contient les éléments suivants dans les teneurs suivantes :
Na : de 30 g/L à 80 g/L
B : de 0 g/L à 5 g/L
Mn : de 0 g/L à 1 g/L
Ce : de 0 g/L à 14 g/L
Fe : de 0 g/L à 3 g/L
Ni : de 0 g/L à 1 g/L
Cr : de 0 g/L à 1 g/L
Zr : de 0 g/L à 16 g/L
Mo : de 0 g/L à 10 g/L
P : de 0 g/L à 4 g/L
S : de 0 g/L à 1,7 g/L
Ba : de 0 g/L à 7 g/L
Gd : de 0 g/L à 1 g/L
Tc : 1 g/L ou moins
Actinides : de 0 g/L à 8 g/L
Platinoïdes : 1 g/L ou moins ;
la teneur totale en lesdits éléments étant de 30 g/L à 154,7 g/L.

8. Procédé selon la revendication 7, dans lequel l'effluent liquide radioactif contient les éléments suivants dans les teneurs suivantes :
Na : 55 g/L
B : 2, 5 g/L
Mn : 0,5 g/L
Ce : 7 g/L
Fe : 1,5 g/L
Ni : 0,5 g/L
Cr : 0,5 g/L
Zr : 8 g/L
Mo : 5 g/L
P : 2 g/L
S : 0,85 g/L
Ba : 3,5 g/L
Gd : 0,5 g/L
Tc : 1g/L
Actinides : 4 g/L
Platinoïdes : 1g/L ;
la teneur totale en lesdits éléments étant de 93,35 g/L

9. Procédé selon l'une quelconque des revendications 6 à 8, dans lequel l'adjuvant de calcination est choisi parmi le nitrate d'aluminium, le nitrate de fer, le nitrate de zirconium, les nitrates de terres rares, et leurs mélanges.

10. Procédé selon la revendication 9, dans lequel l'adjuvant de calcination est un mélange de nitrate d'aluminium et de nitrate de fer, de préférence dans lequel les proportions suivantes relatives aux teneurs sont respectées : 0,66 < Al₂O₃/(Al₂O₃ + Fe₂O₃) < 1 où les teneurs sont des teneurs massiques en oxydes.

11. Procédé selon l'une quelconque des revendications 7 à 10, dans lequel le rapport Na₂O/somme des oxydes dans le calcinat est inférieur ou égal à 0,3

12. Procédé selon l'une quelconque des revendications 7 à 11, dans lequel l'adjuvant de vitrification est tel que défini dans l'une quelconque des revendications 3 à 5.

13. Procédé selon l'une quelconque des revendications 7 à 11, dans lequel la fusion du calcinat et de l'adjuvant de vitrification est réalisée à une température de 1200 °C à 1300 °C de préférence de 1250 °C.

## Claims

1. An alumino-borosilicate glass for the confinement of a radioactive liquid effluent of medium activity, having the following composition expressed in percentages by mass based on the total mass of the glass:
a) SiO₂: 45 to 52
b) B₂O₃: 12 to 16.5
c) Na₂O: 11 to 15
d) Al₂O₃: 4 to 13
e) one or more element(s) ETR selected from the oxides of transition elements such as Fe₂O₃, Cr₂O₃, MnO₂, TcO₂, and the platinoids such as RuO₂, Rh, Pd:> 0 to 5.25;
f) One or more element(s) TRA selected from rare earth oxides such as La₂O₃, Nd₂O₃, Gd₂O₃, Pr₂O₃, CeO₂, and from actinides oxides such as UO₂, ThO₂, Am₂O₃, PuO₂ CmO₂, NpO₂: 0 to 3.5;
g) ZrO₂: 0 to 4
h) Other elements AUT constituting the effluent: 0 to 4;
the composition of the glass further satisfying the following inequations in which the SiO₂, Al₂O₃, B₂O₃, Na₂O, ETR, AUT are expressed in percentages by mass based on the total mass of the glass:
(1) SiO₂ + Al₂O₃ < 61 %
(2) 71 % < SiO₂ + B₂O₃ + Na₂O < 80.5 %
(3) B₂O₃/Na₂O > 0.9
(4) 0.7 A1203 - ETR < 5 %
(5) Al₂O₃/ETR > 2.5
(6) 0.127 (B₂O₃ + Na₂O) > AUT;
and the glass containing Fe₂O₃.

2. The glass according to claim 1, wherein the other elements constituting the effluent (« AUT ») are selected from the following oxides: SO₃, P₂O₅, MoO₃, BaO.

3. A vitrification adjuvant **characterized in that** it has the following composition expressed in percentages by mass:
- SiO₂: 58 to 65
- B₂O₃: 15 to 19
- Na₂O: 5 to 10
- Al₂O₃: 0 to 3
- Li₂O: 1 to 4
- CaO: 1.5 to 4
- ZrO₂: 0 to 3
- Fe₂O₃: 2 to 4
- NiO: 0 to 2
- CoO: 0 to 2

4. The vitrification adjuvant according to claim 3, **characterized in that** it is in the form of a glass frit.

5. The vitrification adjuvant according to claim 3, **characterized in that** it is in the form of a mixture of chemical products, especially of oxides, in the form of powders.

6. A method for treating a radioactive liquid effluent of medium activity, wherein calcination of said effluent, to which is optionally added a calcination adjuvant, is carried out in order to obtain a calcinate, and a vitrification adjuvant is then added to said calcinate, it is proceeded with the melting of said calcinate and of said vitrification adjuvant in a cold crucible in order to obtain a glass melt, and said glass melt is then cooled down, whereby the alumino-borosilicate glass as defined in claim 1 is obtained.

7. The method according to claim 6, wherein the radioactive liquid effluent of medium activity contains the following elements in the following contents:
Na: from 30 g/L to 80 g/L
B: from 0 g/L to 5 g/L
Mn: from 0 g/L to 1 g/L
Ce: from 0 g/L to 14 g/L
Fe: from 0 g/L to 3 g/L
Ni: from 0 g/L to 1 g/L
Cr: from 0 g/L to 1 g/L
Zr: from 0 g/L to 16 g/L
Mo: from 0 g/L to 10 g/L
P: from 0 g/L to 4 g/L
S: from 0 g/L to 1.7 g/L
Ba: from 0 g/L to 7 g/L
Gd: from 0 g/L to 1 g/L
Tc: 1 g/L or less
Actinides: from 0 g/L to 8 g/L
Platinoids: 1 g/L or less;
the total content of said elements being from 30 g/L to 154.7 g/L.

8. The method according to claim 7, wherein the radioactive liquid effluent contains the following elements in the following contents:
Na: 55 g/L
B: 2.5 g/L
Mn: 0.5 g/L
Ce: 7 g/L
Fe: 1.5 g/L
Ni: 0.5 g/L
Cr: 0.5 g/L
Zr: 8 g/L
Mo: 5 g/L
P: 2 g/L
S: 0.85 g/L
Ba: 3.5 g/L
Gd: 0.5 g/L
Tc: 1 g/L
Actinides: 4 g/L
Platinoids: 1 g/L;
the total content of said elements being 93.35 g/L.

9. The method according to any one of claims 6 to 8, wherein the calcination adjuvant is selected from aluminium nitrate, iron nitrate, zirconium nitrate, rare earth nitrates, and mixtures thereof.

10. The method according to claim 9, wherein the calcination adjuvant is a mixture of aluminium nitrate and of iron nitrate, preferably wherein the following proportions relating to the contents are observed: 0.66 < Al₂O₃/(Al₂O₃ + Fe₂O₃) < 1 wherein the contents are oxide contents by mass.

11. The method according to any one of claims 7 to 10, wherein the Na₂O/(sum of the oxides in the calcinate) ratio is less than or equal to 0.3.

12. The method according to any one of claims 7 to 11, wherein the vitrification adjuvant is as defined in any one of claims 3 to 5.

13. The method according to any one of claims 7 to 11, wherein the melting of the calcinate and of the vitrification adjuvant is carried out a temperature from 1,200°C to 1,300°C preferably 1,250°C.

## Patentansprüche

1. Alumino-Borsilikatglas zum Einschluss eines radioaktiven flüssigen Abfalls von mittlerer Aktivität mit folgender in prozentualen Massenanteilen bezüglich der Gesamtmasse des Glases ausgedrückten Zusammensetzung :
a) SiO₂ : 45 bis 52
b) B₂O₃ : 12 bis 16,5
c) Na₂O : 11 bis 15
d) Al₂O₃ : 4 bis 13
e) ein (oder mehrere) Element(e) ETR, ausgewählt unter den Oxiden der Übergangselemente wie Fe₂O₃, Cr₂O₃, MnO₂, TcO₂ und den Platinoiden wie RuO₂, Rh, Pd :> 0 bis 5,25 ;
f) ein (oder mehrere) Element(e) TRA, ausgewählt unter den Oxiden von Seltenerden wie La₂O₃, Nd₂O₃, Gd₂O₃, Pr₂O₃, CeO₂ und Aktinoiden wie UO₂, ThO₂, Am₂O₃, PuO₂, CmO₂, NpO₂ : 0 bis 3,5 ;
g) ZrO₂ : 0 bis 4
h) Andere wesentliche Bestandteile AUT des Abwassers : 0 bis 4 ;
wobei die Zusammensetzung des Glases außerdem die folgenden Ungleichungen erfüllt, bei denen die Gehalte an SiO₂, Al₂O₃, B₂O₃, Na₂O, ETR, AUT in prozentualen Massenanteilen in Bezug auf die Gesamtmasse des Glases ausgedrückt sind :
(1) SiO₂ + Al₂O₃ < 61 %
(2) 71 % < SiO₂ + B₂O₃ + Na₂O < 80,5 %
(3) B₂O₃/Na₂O > 0,9
(4) 0,7 Al₂O₃ - ETR < 5 %
(5) Al₂O₃/ETR > 2,5
(6) 0,127 (B₂O₃ + Na₂O) > AUT
und wobei das Glas außerdem Fe₂O₃ enthält.

2. Glas nach Anspruch 1, bei dem die anderen wesentlichen Bestandteile des Abwassers (« AUT ») unter den folgenden Oxiden ausgewählt werden: SO₃, P₂O₅, MoO₃, BaO.

3. Vitrifikations-Zusatzmittel, **dadurch gekennzeichnet, dass** es die folgende in Massenprozenten ausgedrückte Zusammensetzung aufweist:
- SiO₂ : 58 bis 65
- B₂O₃ : 15 bis 19
- Na₂O : 5 bis 10
- Al₂O₃ : 0 bis 3
- Li₂O : 1 bis 4
- CaO : 1,5 bis 4
- ZrO_{2 :} 0 bis 3
- Fe₂O₃ : 2 bis 4
- NiO : 0 bis 2
- CoO : 0 bis 2

4. Vitrifikations-Zusatzmittel nach Anspruch 3, **dadurch gekennzeichnet, dass** es sich in Form einer Glasfritte präsentiert.

5. Vitrifikations-Zusatzmittel nach Anspruch 3, **dadurch gekennzeichnet, dass** es sich in Form eines Gemisches von chemischen Produkten, insbesondere Oxiden, in Form von Pulvern präsentiert.

6. Verfahren zur Behandlung eines radioaktiven flüssigen Abfalls von mittlerer Aktivität, wobei man eine Kalzination des genannten Abwassers durchführt, dem man eventuell ein Kalzinations-Zusatzmittel beigemischt hat, um ein Kalzinat zu erhalten, man dann dem Kalzinat ein Vitrifikations-Zusatzmittel beimischt, man die Verschmelzung des genannten Kalzinats und des genannten Vitrifikations-Zusatzmittels in einem kalten Tiegel durchführt, um eine Glasschmelze zu erhalten, man dann die genannte Glasschmelze abkühlt, wodurch man das Alumino-Borsilikatglas wie definiert in Anspruch 1 erhält.

7. Verfahren nach Anspruch 6, bei dem der radioaktive flüssige Abfall von mittlerer Aktivität die folgenden Elemente mit folgenden Gehalten umfasst :
Na : von 30 g/l bis 80 g/l
B : von 0 g/l bis 5 g/l
Mn : von 0 g/l bis 1 g/l
Ce : von 0 g/l bis 14 g/l
Fe : von 0 g/l bis 3 g/l
Ni : von 0 g/l bis 1 g/l
Cr : von 0 g/l bis 1 g/l
Zr : von 0 g/l bis 16 g/l
Mo : von 0 g/l bis 10 g/l
P : von 0 g/l bis 4 g/l
S : von 0 g/l bis 1,7 g/l
Ba : von 0 g/l bis 7 g/l
Gd : von 0 g/l bis 1 g/l
Tc : 1 g/l oder weniger
Aktinoide : von 0 g/l bis 8 g/l
Platinoide : 1 g/l oder weniger;
wobei der Gesamtgehalt an den genannten Elementen 30 g/l bis 154,7 g/l beträgt.

8. Verfahren nach Anspruch 7, bei dem der radioaktive flüssige Abfall die folgenden Elemente mit folgenden Gehalten umfasst:
Na : 55 g/l
B : 2,5 g/l
Mn : 0,5 g/l
Ce : 7 g/l
Fe : 1,5 g/l
Ni : 0,5 g/l
Cr : 0,5 g/l
Zr : 8 g/l
Mo : 5 g/l
P : 2 g/l
S : 0,85 g/l
Ba : 3,5 g/l
Gd : 0,5 g/l
Tc : 1 g/l
Aktinoide : 4 g/l
Platinoide : 1 g/l;
wobei der Gesamtgehalt an den genannten Elementen 93,35 g/l beträgt.

9. Verfahren nach einem der Ansprüche 6 bis 8, bei das Kalzinations-Zusatzmittel ausgewählt wird unter dem Aluminiumnitrat, dem Eisennitrat, dem Zirkonnitrat, den Seltenerdnitraten, und ihren Gemischen.

10. Verfahren nach Anspruch 9, bei das Kalzinations-Zusatzmittel ein Gemisch von Aluminiumnitrat und Eisennitrat mit vorzugsweise folgenden Proportionen bezüglich der Gehalte ist: 0,66 < Al₂O₃/(Al₂O₃ + Fe₂O₃) < 1, wo die Gehalte Massengehalte an Oxiden sind.

11. Verfahren nach einem der Ansprüche 7 bis 10, bei dem das Verhältnis Na₂O/Summe der Oxide in dem Kalzinat niedriger oder gleich 0,3 ist.

12. Verfahren nach einem der Ansprüche 7 bis 11, bei dem das Vitrifikations-Zusatzmittel so ist wie definiert in einem der Ansprüche 3 bis 5.

13. Verfahren nach einem der Ansprüche 7 bis 11, bei dem die Verschmelzung des Kalzinats und des Vitrifikations-Zusatzmittels bei einer Temperatur von 1200 °C bis 1300 °C, vorzugweise 1250 °C stattfindet.
